# EUROPEAN PATENT SPECIFICATION

(11) **EP 4 391 100 B1**
(45) Date of publication and mention of the grant of the patent: **18.02.2026**
(21) Application number: 23846878.9
(22) Date of filing: 12.07.2023
(51) Int. Cl.: H01M 4/04, B05C 5/02

(54) **SLOT DIE COATER AND ELECTRODE COATING DEVICE INCLUDING SAME**
SCHLITZDÜSENBESCHICHTER UND ELEKTRODENBESCHICHTUNGSVORRICHTUNG DAMIT
COUCHEUSE À FILIÈRE À FENTES ET DISPOSITIF DE REVÊTEMENT D'ÉLECTRODE LA COMPRENANT

(30) Priority: 27.07.2022 KR 20220092930
(43) Date of publication of application: 26.06.2024
(73) Proprietor: LG Energy Solution, Ltd., Seoul 07335 (KR)
(72) Inventor: PARK, Joon-Sun, Daejeon 34122 (KR)
(74) Representative: Plasseraud IP
(86) International application number: PCT/KR2023/009976
(87) International publication number: WO 2024/025219

(56) References cited:
- JP-A- 2001 327 906
- JP-A- 2013 208 600
- KR-A- 20110 070 061
- KR-A- 20140 073 956
- KR-A- 20190 007 746
- KR-A- 20190 081 544
- US-A1- 2022 016 665

## Description

### TECHNICAL FIELD

The present application claims priority to Korean Patent Application No. 10-2022-0092930 filed on July 27, 2022 in the Republic of Korea.

The present disclosure relates to a slot die coater and an electrode coating device including the same and, more specifically, relates to a slot die coater that discharges a coating material onto a surface of a substrate through a slot, and an electrode coating device including the same.

### BACKGROUND ART

In general, an electrode assembly of a secondary battery capable of being repeatedly charged and discharged is manufactured by stacking or winding multiple layers in a laminated structure in which a separator is interposed between a first electrode corresponding to the positive electrode (cathode) and a second electrode corresponding to the negative electrode (anode). In this case, each electrode is manufactured by applying a slurry coating material containing a positive-electrode active material or a negative-electrode active material onto an electrode substrate made of aluminum or copper and drying the same.

Recently, slot die coaters have been used in the coating process of this electrode substrate. The slot die coater is a device that discharges a coating material through a slot to coat the surface of a substrate to be coated.

However, as disclosed in Korean Unexamined Patent Publication No. 10-2019-0060557, in the existing technology, since pressure is applied to the inside of the slot die coater to discharge a coating material contained inside the slot die coater through an opening of a slot having a relatively large width and a very small height, when applied to an actual coating process, there is a problem in which the width of the discharged coating material expands beyond the width of the slot opening due to discharge pressure and atmospheric pressure, bringing about a result different from the design.

Moreover, the existing technology has a problem in which the width of the discharged coating material becomes uneven due to the pulsation of pressure applied into the slot die coater.

### DISCLOSURE

### Technical Problem

The present disclosure is designed to solve the problems of the related art, and therefore the present disclosure is directed to providing a slot die coater capable of preventing a phenomenon in which the width of the coating material discharged onto the surface of the substrate through the slot expands beyond the width of the slot opening due to the discharge pressure and atmospheric pressure and a phenomenon in which the width of the coating material becomes uneven due to the pulsation of discharge pressure, and an electrode coating device including the same.

JP 2013 208600 A discloses a coating device allowing to achieve uniform coating thickness.

### Technical Solution

The invention is as set out in the appended claims.

A slot die coater according to the present invention is a device configured to discharge a coating material onto a surface of a substrate, and may include: a first die having a first surface; a second die having a second surface facing the first surface; and a shim plate interposed between the first surface of the first die and the second surface of the second die to form a slot through which the coating material is discharged, wherein the second die may include a pair of guide lips protruding from both ends of the opening of the slot toward the substrate.

In an embodiment, the pair of guide lips may be configured to come into contact with both side edge portions of the coating material discharged onto the surface of the substrate so as to guide the movement of the coating material according to the movement of the substrate.

In an embodiment, the first die may further include an accommodation groove configured to accommodate the coating material and lead to the slot.

In an embodiment, the first die may include: a body portion having the first surface and the opening located at the front end thereof; and a support portion extending from the rear end of the body portion toward the second die and supporting the second die.

In a first embodiment, the first die includes a first die lip protruding toward the substrate so as to form one side wall of the opening.

In a second embodiment, the second die further includes a second die lip protruding toward the substrate between the pair of guide lips so as to form the other side wall of the opening, and the pair of guide lips are configured to protrude more than the second die lip toward the substrate.

In the second embodiment, the protruding length of the pair of guide lips toward the substrate may be configured to be greater than that of the second die lip in the range of 100*µ*m to 300*µ*m.

In the second embodiment, the pair of guide lips and the second die lip may be configured to have a predetermined thickness, respectively, and protrude toward the substrate, and the pair of guide lips may be configured to be thicker than the second die lip.

In the second embodiment, the second die further includes a second die lip protruding toward the substrate between the pair of guide lips so as to form the other side wall of the opening, and the first die lip is configured to protrude more than the second die lip toward the substrate.

In an embodiment, the second die may include: a first die block disposed at a predetermined gap from the first die so as to form the slot; a second die block having a first guide lip among the pair of guide lips and disposed on one side of the first die block; and a third die block having a second guide lip among the pair of guide lips and disposed on the other side of the first die block, and the first die block may include: a first support protrusion protruding from one side of the first die block facing the second die block toward the second die block; and a second support protrusion protruding from the other side of the first die block facing the third die block toward the third die block, and the second die block may further include a first support groove configured to receive the first support protrusion to support the first die block, and the third die block may further include a second support groove configured to receive the second support protrusion to support the first die block.

An electrode coating device according to the present invention is a device including the slot die coater according to one of the embodiments described above, and may be configured to coat an electrode substrate using the slot die coater.

### Advantageous Effects

According to the present disclosure, a pair of guide lips respectively protruding from both widthwise ends of the opening of the slot toward the substrate to be coated may come into contact with both side edge portions of the coating material discharged onto the surface of the substrate to block the coating material from expanding in the side direction of the coating material and to guide the movement of the coating material according to the movement of the substrate, thereby minimizing the phenomenon in which the width of the discharged coating material expands beyond the width of the slot opening due to the discharge pressure or atmospheric pressure and preventing the phenomenon in which the width of the discharged coating material becomes uneven due to pulsation of the discharge pressure.

In addition, among the two die lips that form the opening of the slot, a first die lip that earlier meets the substrate moving in one direction may be configured to protrude more toward the substrate than the second die lip that later meets the substrate, thereby preventing the coating material discharged through the slot from leaking in the opposite direction of the movement direction of the substrate due to the discharge pressure or atmospheric pressure.

In addition, among the first die and the second die constituting the slot die coater, since the second die having the pair of guide lips may be configured by coupling of a first die block forming the slot together with the first die, a second die block having a first guide lip among the pair of guide lips, and a third die block having a second guide lip among the pair of guide lips, it is possible to easily implement a fine step structure formed between the pair of guide lips and the opening of the slot without precision machining and reduce manufacturing time and manufacturing cost while improving the precision of the slot die coater.

In addition, since a support structure may be provided to support the first die block without using additional fastening members so as to maintain the gap between the first die and the first die block of the second die, even if the slot die coater is manufactured using the second die configured as a combination of die blocks, instead of an integrated block, the durability and reliability of the slot die coater is able to be guaranteed.

Furthermore, those skilled in the art to which the present disclosure pertains will be able to clearly understand from the following description that various embodiments according to the present disclosure can solve various technical problems not mentioned above.

### DESCRIPTION OF DRAWINGS

FIG. 1 is a perspective view illustrating a slot die coater according to an embodiment of the present disclosure.
FIG. 2 is an enlarged view illustrating the area M1 in FIG. 1.
FIG. 3 is an exploded perspective view illustrating the slot die coater shown in FIG. 1.
FIG. 4 is a cross-sectional view taken along line A-A' of the slot die coater shown in FIG. 1.
FIG. 5 is a cross-sectional view taken along line B-B' of the slot die coater shown in FIG. 1.
FIG. 6 is an enlarged view illustrating the area M2 in FIG. 5.
FIG. 7 is a cross-sectional view illustrating the lip structure of a slot die coater according to a modified embodiment of the present disclosure.
FIG. 8 is a diagram illustrating the coating method of a slot die coater according to an embodiment of the present disclosure.
FIG. 9 is a diagram illustrating a coating layer formed by a general slot die coater.
FIG. 10 is a diagram illustrating a coating layer formed by a slot die coater according to an embodiment of the present disclosure.
FIG. 11 is a diagram illustrating a second die of a slot die coater according to a modified embodiment of the present disclosure.
FIG. 12 is a diagram illustrating an electrode coating device according to an embodiment of the present disclosure.

### BEST MODE

Hereinafter, embodiments according to the present disclosure will be described in detail with reference to the accompanying drawings to clarify solutions corresponding to the technical problems of the present disclosure. However, in describing the present disclosure, a description of related known technology, which may obscure the subject matter of the present disclosure, may be omitted. In addition, the terms used in this specification are defined in consideration of the functions in the present disclosure and may vary depending on the intention of the designer, manufacturer, etc. or custom thereof. Therefore, definitions of the terms described below should be made based on the description throughout this specification.

Meanwhile, the same reference numerals indicate the same components in the attached drawings. In addition, the components of the present disclosure or parts of each component shown in the attached drawings may be exaggerated, reduced, or simplified in order to effectively explain the technical features of the present disclosure.

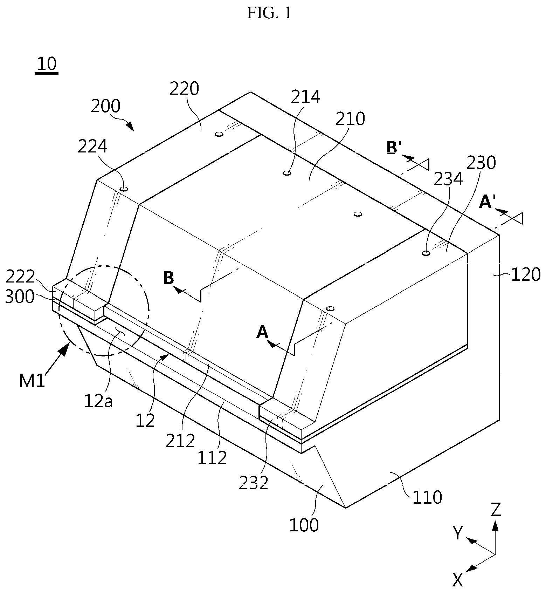

FIG. 1 is a perspective view illustrating a slot die coater 10 according to an embodiment of the present disclosure.

As shown in FIG. 1, the slot die coater 10 according to an embodiment of the present invention is configured to discharge a coating material through a slot 12 to the transfer path of a target substrate transferred in one direction by a predetermined transfer means so as to coat the surface of the target substrate. To this end, the slot die coater 10 includes a first die 100, a second die 200, and a shim plate 300.

The first die 100 may be configured to have a first surface facing the second die 200 and to be combined with the second die 200 to form an accommodation space for accommodating a coating material.

In this case, the first die 100 may include a body portion 110 that has the first surface and an opening 12a of the slot located at the front end thereof, and a support portion 120 that extends from the rear end of the body portion 110 toward the second die 200 so as to support the second die 200. In addition, the body portion 110 of the first die 100 may have a first die lip 112 that protrudes toward the target substrate (X-axis direction) and forms one side wall of the opening 12a.

The opening 12a located at the end of the slot 12 may have a predetermined height and width, but may have a width considerably greater than its height. As will be described again below, the width of the opening 12a located at the end of the slot 12 may correspond to the width of a coating layer formed on the surface of the substrate.

The second die 200 may be configured to have a second surface facing the first surface of the first die 100 and to be combined with the first die 100 to form the accommodation space for accommodating the coating material.

In addition, the second die 200 has a pair of guide lips 222 and 232 that respectively protrudes from both widthwise ends of the opening 12a toward the target substrate (X-axis direction).

The pair of guide lips 222 and 232 may be configured to come into contact with the edge portions of both sides in the width direction of the coating material discharged onto the surface of the target substrate to prevent the coating material from expanding in the edge direction thereof due to discharge pressure or atmospheric pressure and guide the movement of the coating material according to the movement of the target substrate.

In addition, in the second embodiment of the invention, the second die 200 includes a second die lip 212 that protrudes toward the target substrate (X-axis direction) between the pair of guide lips 222 and 232 so as to form the other side wall of the opening 12a.

In this case, the pair of guide lips 222 and 232 are configured to protrude more than the second die lip 212 toward the target substrate. As will be described again below, the protruding length of the pair of guide lips 222 and 232 toward the target substrate may be configured to be greater than that of the second die lip 212 in the range of 100*µ*m to 300*µ*m.

In addition, the first die lip 112 of the first die 100 may be configured to protrude more than the second die lip 212 toward the target substrate. In this case, the protruding length of the first die lip 112 toward the target substrate may be configured to be greater than that of the second die lip 212 in the range of 100*µ*m to 300*µ*m. Depending on the embodiment, the first die lip 112 may be configured to protrude by the same length as the second die lip 212.

In an embodiment, the second die 200 may include a first die block 210, a second die block 220, and a third die block 230. The second die 200 may be formed by coupling of the first die block 210, the second die block 220, and the third die block 230. That is, the second die 200 may be configured by coupling three die blocks 210, 220, and 230 side by side along the width direction of the opening 12a.

In this case, the first die block 210 may include the second die lip 212 and may be configured to be disposed at a certain gap from the first die 100 to form the slot 12.

The second die block 220 may include the first guide lip 222 among the pair of guide lips 222 and 232 and may be configured to be disposed on one side of the first die block 210.

The third die block 230 may include the second guide lip 232 among the pair of guide lips 222 and 232 and may be configured to be disposed on the other side of the first die block 210.

The first die block 210, the second die block 220, and the third die block 230 may be configured to be coupled to the first die 100 by fastening members 214, 224, and 234, respectively, such as bolts.

As described above, since the second die 200 constituting the slot die coater 10 may be configured by coupling of the die blocks 210, 220, and 230 each having only one of the guide lip and die lip, it is possible to easily implement a fine step structure formed between the pair of guide lips 222 and 232 and the second die lip 212 without precision machining and reduce manufacturing time and manufacturing cost while improving the precision of the slot die coater.

As will be described again below, the shim plate 300 may be configured to be interposed between the first surface of the first die 100 and the second surface of the second die 200 so as to form the slot 12 through which the coating material is discharged.

Meanwhile, the substrate to be coated by the slot die coater 10 may be an electrode substrate used in manufacturing electrodes of secondary batteries. In this case, the electrode substrate may be a metal foil used in manufacturing the positive or negative electrode, or a sheet of PE (polyethylene) or PP (polypropylene) used in manufacturing a separator.

In addition, the coating material discharged from the slot die coater 10 may be a slurry containing a conductive agent and a binder along with a positive-electrode active material or negative-electrode active material, or may be a coating material containing a ceramic material. In this case, materials such as LiCoO₂, LiMn₂O₄, LiFePO₄, LiNiCoAlO₂, LiNiMnCoO₂, or Li₂TiO₃ may be used as the positive-electrode active material. In addition, materials such as natural graphite, artificial graphite, or low-crystalline carbon may be used as the negative-electrode active material.

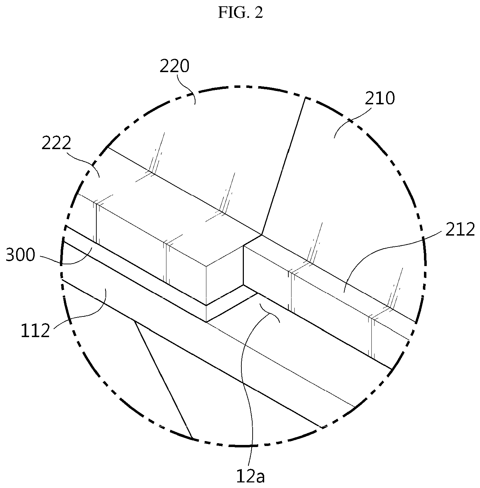

FIG. 2 is an enlarged view illustrating the area M1 in FIG. 1.

As shown in FIG. 2, the first die lip 112 of the first die 100 and the second die lip 212 of the first die block 210 constituting the second die 200 may be disposed to have a gap equal to the thickness of the shim plate 300 therebetween, thereby forming the opening 12a of the slot through which the coating material is discharged.

In addition, the first guide lip 222 of the second die block 220 disposed on one side of the first die block 210 may protrude more than the opening 12a of the slot or the second die lip 212 of the first die block 210 toward the substrate, that is, in the discharge direction of the coating material.

A first step surface provided due to the difference in protruding length between the first guide lip 222 and the second die lip 212 serves to guide the movement of the coating material discharged through the opening 12a of the slot.

Likewise, a second step surface provided due to the difference in protruding length between the second guide lip 232 of the second die block 220 and the second die lip 212 also serves to guide the movement of the coating material discharged through the opening 12a of the slot. In this case, the first step surface of the first guide lip 222 and the second step surface of the second guide lip 232 may be configured as planes facing each other in parallel.

In addition, the protruding lengths of the first guide lip 222 and the second guide lip 232 may be the same.

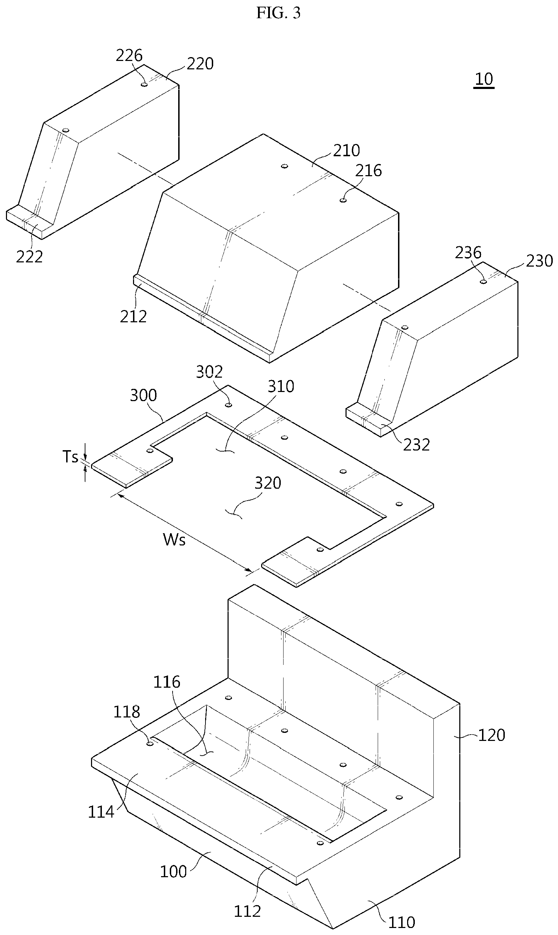

FIG. 3 is an exploded perspective view illustrating the slot die coater 10 shown in FIG. 1.

As shown in FIG. 3, the slot die coater 10 may include a first die 100, die blocks 210, 220, and 230, and a shim plate 300.

As described above, the first die 100 may include the body portion 110 and the support portion 120. A first die lip 112 forming the opening 12a of the slot may be provided at the front end of the body portion 110, and an accommodation groove 116 may be provided on the upper surface 114 of the body portion 110 facing the die blocks 210, 220, and 230.

The accommodation groove 116 may be configured to accommodate the coating material and lead to the slot 12. This accommodation groove 116 may serve as a manifold that delivers the coating material to the slot 12. To this end, the accommodation groove 116 may be configured to be connected to a coating material supply chamber (not shown) installed at the outside through a pipe to receive the coating material from the chamber.

Depending on the embodiment, the body portion 110 may have a fastening groove 118 through which a predetermined fastening member used to couple the die blocks 210, 220, and 230 and the shim plate 300 to the body portion 110 is fastened.

The support portion 120 may be configured to extend upwards from the rear end of the body portion 110 so as to support the die blocks 210, 220, and 230. In this case, the body portion 110 and the support portion 120 may be formed integrally with each other.

The die blocks 210, 220, and 230 coupled to the first die 100 may be configured to have lower surfaces facing the upper surface 114 of the first die 100, respectively, and to be coupled to the first die 100 to form the accommodation space for accommodate the coating material and the slot 12 for discharging the coating material.

To this end, the first die block 210 includes a second die lip 212 that forms the opening 12a of the slot together with the first die lip 212 of the first die 100. Depending on the embodiment, the first die block 210 may have an insertion hole 216 into which a fastening member used to couple the first die block 210 to the first die 100 is inserted.

In addition, the second die block 220 may be configured to have a first guide lip 222 among the pair of guide lips 222 and 232 and to be disposed on one side of the first die block 210. Depending on the embodiment, the second die block 220 may have an insertion hole 226 into which a fastening member used to couple the second die block 220 to the first die 100 is inserted.

The third die block 230 may be configured to have a second guide lip 232 among the pair of guide lips 222 and 232 and to be disposed on the other side of the first die block 210. Depending on the embodiment, the third die block 230 may have an insertion hole 236 into which a fastening member used to couple the third die block 230 to the first die 100 is inserted.

The first die 100 and the die blocks 210, 220, and 230 of the second die 200 may be made of a material including stainless steel. For example, the first die 100 and the die blocks 210, 220, and 230 of the second die 200 may be made of a stainless steel material that is easy to process and has high corrosion resistance, such as SUS304, SUS316L, SUS420J2, SUS440C, SUS630, or the like.

The shim plate 300 is configured to be interposed between the upper surface of the first die 100 and the lower surfaces of the die blocks 210, 220, and 230 so as to form the slot 12 through which the coating material is discharged. The shim plate 300 may determine the shape of the slot 12 through which the coating material is discharged and serve as a gasket that prevents leakage of the coating material to the outside in portions other than the slot 12 of the slot die coater 10.

To this end, the shim plate 300 may have a plate structure that entirely covers the upper surface 114 of the first die 100. In addition, the shim plate 300 may have a hollow 310 formed in the center thereof so as to correspond to the accommodation groove 116 of the first die 100, and an opening 320 formed on one side thereof so as to lead to the hollow 310.

This shim plate 300 may determine the shape of the opening 12a of the slot through which the coating material is discharged. That is, the thickness Ts of the shim plate 300 may determine the height of the opening 12a of the slot, and the opening width Ws of the shim plate 300 may determine the width of the opening 12a of the slot.

Depending on the embodiment, the shim plate 300 may have an insertion hole 302 into which a fastening member used to couple the shim plate 300 to the first die 100 is inserted.

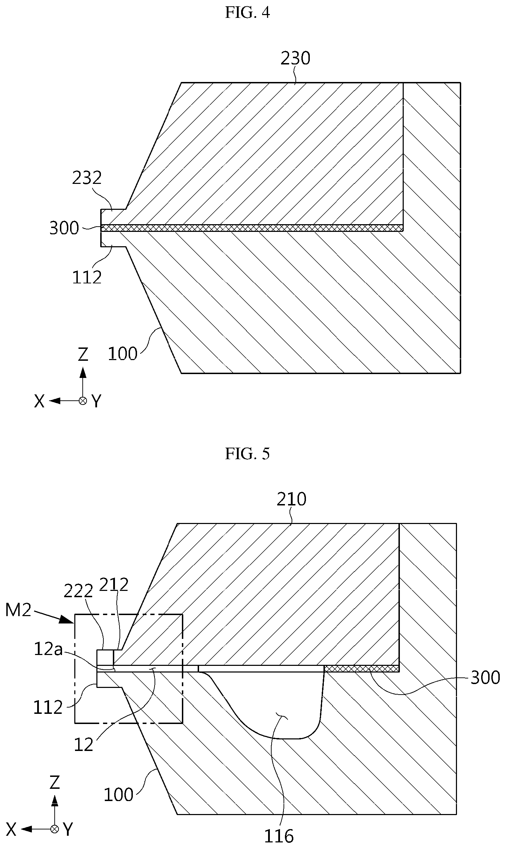

FIG. 4 is a cross-sectional view taken along line A-A' of the slot die coater 10 shown in FIG. 1.

As shown in FIG. 4, the third die block 230 corresponding to the side portion of the second die 200 may be coupled to the first die 100 with the shim plate 300 interposed therebetween. The guide lip 232 of the third die block 230 may protrude toward the substrate (in the X-axis direction). In this case, the die lip 112 of the first die 100 may protrude by the same length as the guide lip 232 of the third die block 230.

Depending on the embodiment, the die lip 112 of the first die 100 may be configured to protrude by a length shorter than the guide lip 232 of the die block 230.

The second die block 220 corresponding to the other side portion of the second die 200 may have a structure corresponding to the third die block 230 described above.

FIG. 5 is a cross-sectional view taken along line B-B' of the slot die coater 10 shown in FIG. 1.

As shown in FIG. 5, the first die block 210 corresponding to the center portion of the second die 200 may be coupled to the first die 100 with the shim plate 300 interposed therebetween so as to form the slot 12 leading to the accommodation groove 116 of the first die 100.

That is, the rear end of the first die block 210 may be coupled to and supported by the first die 100 with the shim plate 300 interposed therebetween. On the other hand, the front end of the first die block 210 may be spaced apart from the first die 100 by a gap corresponding to the thickness of and the shim plate 300, thereby forming the slot 12.

Meanwhile, the die lip 112 of the first die 100 and the die lip 212 of the die block 210 may form the opening 12a of the slot. As described above, the height of the opening 12a may correspond to the thickness of the shim plate 300, and the width of the opening 12a may correspond to the width of the opening 320 provided in the shim plate 300.

The movement of the coating material discharged through the opening 12a of the slot formed above may be guided by the guide lips 222 and 232 protruding from both widthwise ends of the opening 12a, respectively.

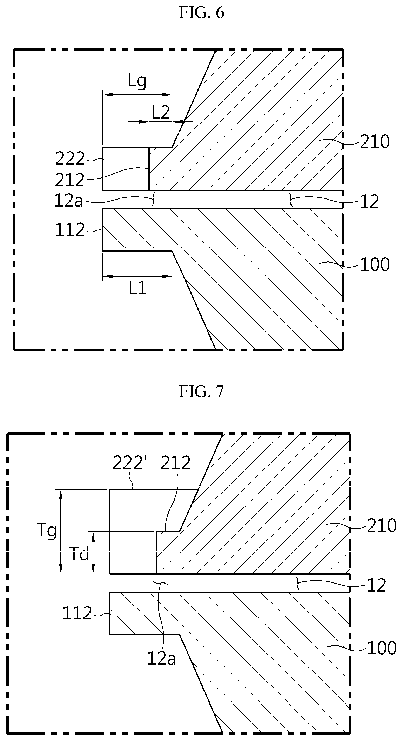

FIG. 6 is an enlarged view illustrating the area M2 in FIG. 5.

As shown in FIG. 6, the first die lip 112 provided in the first die 100 and the second die lip 212 provided in the first die block 210 among the die blocks 210, 220, and 230 of the second die 200 may form the opening 12a of the slot through which the coating material is discharged.

In this case, the length L1 of the first die lip 112 may be configured to be greater than the length L2 of the second die lip 212. In another embodiment, the length L1 of the first die lip 112 may be configured to be the same as the length L2 of the second die lip 212.

Meanwhile, the first guide lip 222 of the second die block 220 may have a predetermined thickness and protrude from the opening 12a toward the substrate by a predetermined length Lg. That is, the first guide lip 222 may protrude more than the second die lip 212, which determines the position of the opening 12a, toward the substrate. In other words, the second die lip 212 may be configured to be shorter than the first guide lip 222.

In this case, the length difference (Lg-L2) between the guide lip 222 and the second die lip 212 may be determined in the range of 100*µ*m to 300*µ*m.

If the length difference (Lg-L2) is less than 100*µ*m, both side edges of the coating material discharged onto the surface of the target substrate may be mostly exposed to the atmosphere without coming into contact with the first guide lip 222, so the width of the discharged coating material may expand more than the width of the opening 12a and become uneven.

On the other hand, if the length difference (Lg-L2) exceeds 300*µ*m, since the opening 12a must be spaced from the target substrate by a certain distance or more to ensure a minimum gap between the first guide lip 222 and the target substrate, it is difficult to control the thickness of the coating layer formed on the target substrate.

A coating gap refers to the distance between the end of the die lip and the substrate. This coating gap influences the pressure of the coating bead during coating, thereby affecting the coating width. If the coating gap changes, the width of both side edges of the coating material changes until it reaches an equilibrium with atmospheric pressure.

In the present disclosure, since the second die lip 212 is shorter than the first guide lip 222, the coating gap at the end of the first guide lip 222 is smaller than the coating gap at the end of the second die lip 212. Accordingly, the edge portion of the coating material in contact with the first guide lip 222 has a smaller surface area in contact with air and becomes insensitive to pressure changes. As a result, deformation of the edge portion in contact with the first guide lip 222 may be reduced, and uniformity of the overall coating width may be secured.

The protruding lengths of the first guide lip 222 and the second guide lip 232 may be the same. Therefore, the effect of uniform coating width due to the difference in length between the first guide lip 222 and the second die lip 212 is the same even between the second guide lip 232 and the second die lip 212.

Meanwhile, although the length Lg of the first guide lip 222 and the length L1 of the first die lip 112 are illustrated as being the same or similar to each other in FIG. 6, depending on the embodiment, the first guide lip 222 may be configured to have a length Lg greater than the length L1 of the first die lip 112. In this case, the length difference (Lg-L2) between the first guide lip 222 and the first die lip 112 may be determined in the range of 100,um to 300*µ*m.

FIG. 7 is a cross-sectional view illustrating the lip structure of a slot die coater according to a modified embodiment of the present disclosure.

As shown in FIG. 7, the guide lip 222' may have a predetermined thickness Tg and protrude toward the substrate. In addition, the second die lip 212 may also have a predetermined thickness Td and protrude toward the substrate. In this case, the guide lip 222' may be configured to be thicker than the second die lip 212.

As will be described again below, the coating material discharged onto the surface of the target substrate through the opening 12a of the slot moves in the thickness direction of the guide lip 222' (e.g., the upward direction in FIG. 7) along the target substrate. Accordingly, as the thickness Tg of the guide lip 222' increases, the distance over which the discharged coating material is guided by the guide lip 222' increases. As a result, the effect of the guide lip 222' preventing the discharged coating material from spreading in the width direction (both side directions) and making the edges of the discharged coating material uniform while guiding the movement of the discharged coating material may be further improved.

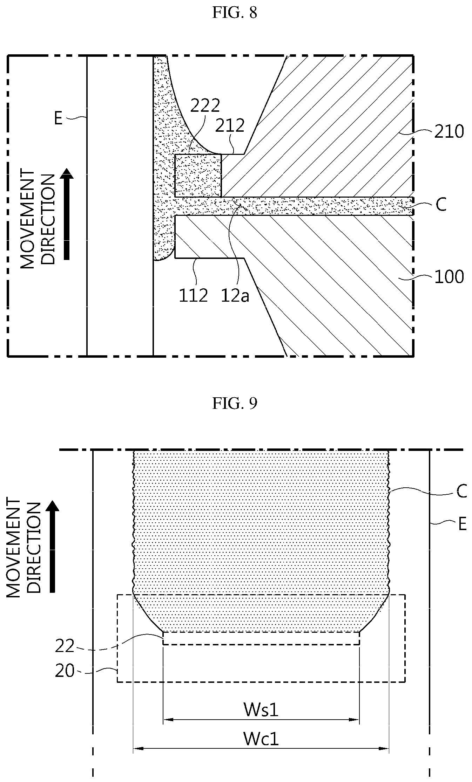

FIG. 8 is a diagram illustrating the coating method of a slot die coater according to an embodiment of the present disclosure.

As shown in FIG. 8, the coating material C discharged onto the surface of the substrate E through the opening 12a of the slot may expand in the width direction (or the direction of CD) of the substrate E or coating material C, which intersect the movement direction (or the direction of MD) of the substrate E, due to discharge pressure and atmospheric pressure.

In this case, the guide lip 222 may guide the movement of the coating material C according to the movement of the target substrate E while blocking the expansion of the discharged coating material C. Therefore, it is possible to prevent the coating width from changing. In addition, since the coating material C forms a coating bead after being guided by the guide lip 222, instead of spreading immediately after leaving the opening 12a of the slot, it is possible to alleviate sliding in which the edge portions of the coating material collapse and form a gentle boundary surface, and the reproducibility of sliding is also increased.

Meanwhile, the coating material C discharged onto the surface of the target substrate E through the opening 12a of the slot may leak in the opposite direction of the movement direction of the target substrate E due to the discharge pressure and atmospheric pressure. This instability in which some of the coating material is lost upstream from the outside of the die lip is referred to as leaking. This leaking indicates loss of pre-metered coating material, which makes the final coating thickness unpredictable. This leaking may cause the coating material to remain for a long period of time and solidify, or cause a difference in the coating thickness in the width direction. In particular, when the coating material is ejected at high pressure for the purpose of thin film coating or in the state in which the coating gap is lowered to hundreds of *µ*m to reduce the thickness difference in the width direction of the coating layer, the above-described leaking may become worse.

In this case, the first die lip 112 protruding from the opening 12a of the slot toward the substrate E may come into contact with the discharged coating material C to prevent the coating material C from leaking in the opposite direction. Accordingly, it is possible to minimize the occurrence of licking and prevent the coating width from becoming uneven due to pulsation of discharge pressure, and the reproducibility of sliding with respect to the edge portion of the coating material also increases.

FIG. 9 is a diagram illustrating a coating layer formed by a general slot die coater 20.

As shown in FIG. 9, the width Wc1 of the coating material C1 discharged onto the surface of the substrate E through the slot 22 of a general slot die coater 20 expands wider than the opening width Ws1 of the slot 22 due to discharge pressure or atmospheric pressure, bringing about a different result from the design intention.

Moreover, the width Wc1 of the coating material C1 is formed non-uniformly depending on the pulsation of the pressure for discharging the coating material C1.

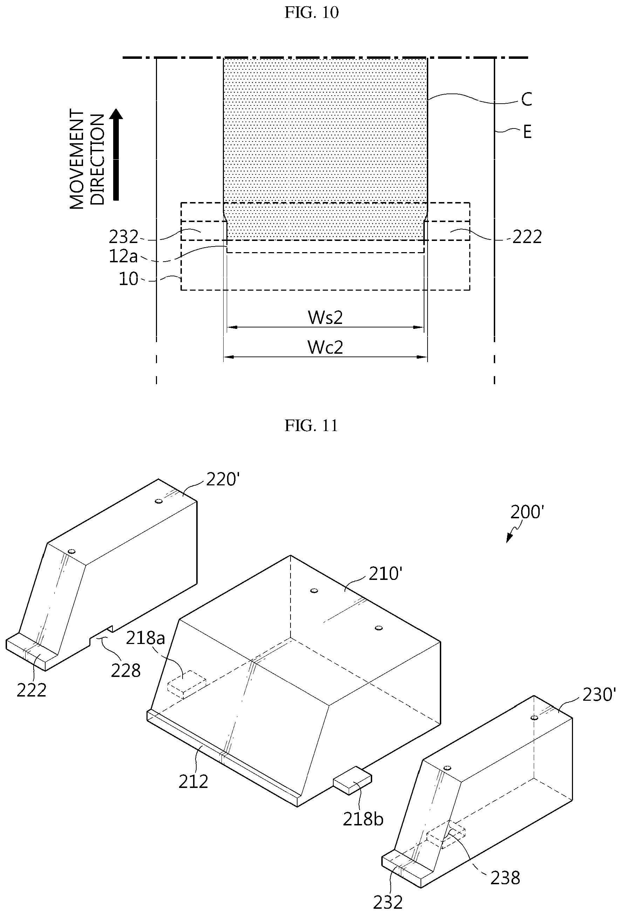

FIG. 10 is a diagram illustrating a coating layer formed by a slot die coater 10 according to an embodiment of the present disclosure.

As shown in FIG. 10, the slot die coater 10 according to an embodiment of the present disclosure includes a pair of guide lips 222 and 232 that has a predetermined thickness and protrudes from both ends of the opening 12a of the slot toward the substrate E.

The pair of guide lips 222 and 232 comes into contact with both side edge portions of the coating material C2 discharged onto the surface of the substrate E to block the coating material C2 from expanding in the width direction thereof (or the direction of CD). As a result, the difference between the width Ws2 of the opening 12a of the slot and the width Wc2 of the coating material C2 discharged through the opening 12a may be minimized.

In addition, the pair of guide lips 222 and 232 may guide the movement of the coating material C2 through step surfaces facing each other in parallel, thereby making the edges of the coating material C2 uniform. As a result, it is possible to prevent the width Wc2 of the coating material C2 from becoming uneven due to pulsation of the pressure for discharging the coating material C2.

As described above, the slot die coater 10 according to the present disclosure may be insensitive to factors that cause changes in coating width, compared to the conventional slot die coater, thereby performing the coating process without a change in the coating width.

FIG. 11 is a diagram illustrating a second die 200' of a slot die coater according to a modified embodiment of the present disclosure.

As shown in FIG. 11, the second die 200' of a slot die coater according to a modified embodiment of the present disclosure may include a first die block 210' forming the center portion thereof, and a second die block 220' and a third die block 230' forming side portions thereof.

In this case, the first die block 210' may include a first support protrusion 218a protruding from one side facing the second die block 220' toward the second die block 220', and a second support protrusion 218b protruding from other side facing the third die block 230' toward the third die block 230'.

The second die block 220' may have a first support groove 228 configured to receive the first support protrusion 218a of the first die block 210' so as to support the first die block 210'.

The third die block 230' may have a second support groove 238 configured to receive the second support protrusion 218b of the first die block 210' so as to support the first die block 210'.

As described above, the supporting structures 218a, 218b, 228, and 238 supporting the first die block 210' may be provided to maintain the gap between the first die 100 and the first die block 210' of the second die 200' without using additional fastening members, thereby ensuring durability and reliability of the slot die coater even if the slot die coater is manufactured using the second die 200' configured by a combination of die blocks, instead of an integral block.

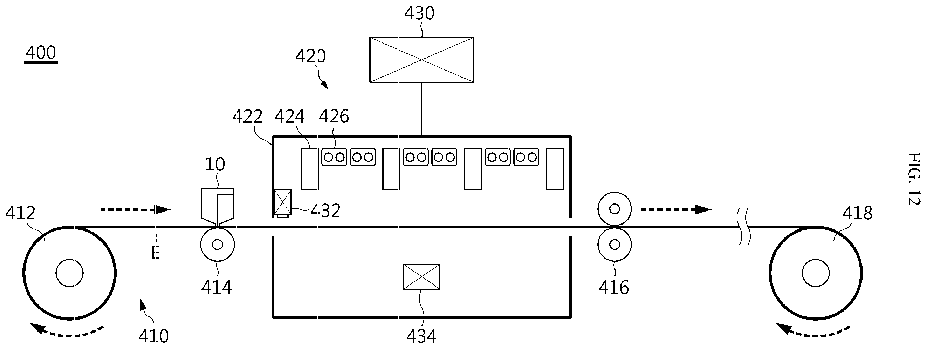

FIG. 12 is a diagram illustrating an electrode coating device 400 according to an embodiment of the present disclosure.

As shown in FIG. 12, the electrode coating device 400 may be configured to include a slot die coater 10 according to an embodiment of the present disclosure and coat the surface of the electrode substrate using the slot die coater 10.

To this end, the electrode coating device 400 may further include a transfer unit 410, a drying unit 420, and a control unit 430.

The transfer unit 410 may be configured to transfer an electrode substrate E to be used in electrode manufacturing to the drying unit 420 via the slot die coater 10. To this end, the transfer unit 410 may include an unwinder 412, a transfer roll 414, a rolling roll 416, and a rewinder 418.

The unwinder 412 may be configured to unwind and move the electrode substrate E that is generally wound in a roll shape. In this case, the unwinder 412 may include a wheel on which the electrode substrate E wound in a roll is fixed, and a motor (not shown) that rotates the wheel at a predetermined direction and speed to unwind the electrode substrate E fixed on the wheel. In this specification, the "electrode substrate" may indicate various sheets used in manufacturing electrode assemblies of secondary batteries, such as sheets for manufacturing positive electrodes, sheets for manufacturing negative electrodes, and sheets for manufacturing separators.

The transfer roll 414 may be configured to be disposed at various positions of the electrode coating device 400 to facilitate movement of the electrode substrate E.

The rolling roll 416 may be configured to roll the electrode substrate E having a coating layer formed thereon and dried by the drying unit 420.

The rewinder 418 may be configured to rewind the rolled electrode substrate E. To this end, the rewinder 418 may include a wheel for rewinding the rolled electrode substrate E and a motor (not shown) that rotates the wheel at a predetermined direction and speed to rewind the rolled electrode substrate E.

Depending on the embodiment, the electrode coating device 400 may be configured to perform a slitting process before transferring the electrode substrate E rolled by the rolling roll 416 to the rewinder 418.

Meanwhile, the slot die coater 10 may apply a coating material onto the surface of the electrode substrate E, which is unwound and transferred by the unwinder 412.

The drying unit 420 may be configured to dry the electrode substrate E onto which the coating material is applied.

To this end, the drying unit 420 may include a chamber 422 with an internal space, a heating unit 424 that provides hot air to the electrode substrate E, and a lamp 426 that radiates electromagnetic waves in a predetermined wavelength band. In this case, the lamp 426 may be configured as a MIR (Medium wave Infra-Red) lamp that emits mid-infrared rays in a wavelength band ranging from 1400 nm to 3000 nm.

The control unit 430 may be configured to control the overall operation of the electrode coating device 400. In particular, the control unit 430 may be configured to control the operation of the heating unit 424 and the lamp 426 disposed inside the chamber 422 of the drying unit 420.

To this end, the control unit 430 may optionally include hardware such as a general-purpose processor for executing control logic, an Application-Specific Integrated Circuit (ASIC), other chipsets, logic circuits, registers, memory, and the like.

In addition, the control unit 430 may further include a temperature sensor 432 that measures the temperature inside the chamber 422 and a gas sensor 434 that measures the gas concentration inside the chamber 422. In this case, the control unit 430 may control the operation of the heating unit 424 and the lamp 426 on the basis of temperature information measured by the temperature sensor 432 and gas concentration information measured by the gas sensor 434.

As described above, according to the present disclosure, a pair of guide lips respectively protruding from both widthwise ends of the opening of the slot toward the substrate to be coated may come into contact with both side edge portions of the coating material discharged onto the surface of the substrate to block the coating material from expanding in the side direction of the coating material and to guide the movement of the coating material according to the movement of the substrate, thereby minimizing the phenomenon in which the width of the discharged coating material expands beyond the width of the slot opening due to the discharge pressure or atmospheric pressure and preventing the phenomenon in which the width of the discharged coating material becomes uneven due to pulsation of the discharge pressure.

In addition, among the two die lips that form the opening of the slot, a first die lip that earlier meets the substrate moving in one direction may be configured to protrude more toward the substrate than the second die lip that later meets the substrate, thereby preventing the coating material discharged through the slot from leaking in the opposite direction of the movement direction of the substrate due to the discharge pressure or atmospheric pressure.

In addition, among the first die and the second die constituting the slot die coater, since the second die having the pair of guide lips may be configured by coupling of a first die block forming the slot together with the first die, a second die block having a first guide lip among the pair of guide lips, and a third die block having a second guide lip among the pair of guide lips, it is possible to easily implement a fine step structure formed between the pair of guide lips and the opening of the slot without precision machining and reduce manufacturing time and manufacturing cost while improving the precision of the slot die coater.

In addition, since a support structure may be provided to support the first die block without using additional fastening members so as to maintain the gap between the first die and the first die block of the second die, even if the slot die coater is manufactured using the second die configured as a combination of die blocks, instead of an integrated block, the durability and reliability of the slot die coater may be guaranteed.

Furthermore, it goes without saying that the embodiments according to the present disclosure are able to solve various technical problems other than those mentioned in this specification in the relevant technical fields as well as this technical field.

So far, the present disclosure has been described with reference to specific embodiments. However, those skilled in the art will clearly understand that various modified embodiments may be implemented within the technical scope of the present disclosure. Therefore, the previously disclosed embodiments should be considered as those intended to describe the present disclosure, instead of those intended to limit the present disclosure.

## Claims

1. A slot die coater (10) configured to discharge a coating material onto a surface of a substrate, the slot die coater (10) comprising:
a first die (100) having a first surface;
a second die (200) having a second surface facing the first surface; and
a shim plate (300) interposed between the first surface of the first die (100) and the second surface of the second die (200) to form a slot (12) through which the coating material is configured to be discharged,
wherein the second die (200) comprises a pair of guide lips (222, 232) protruding from both ends of the opening of the slot (12) toward the substrate to be coated,
**characterized in that** the second die (200) further comprises a second die lip (212) protruding toward the substrate between the pair of guide lips (222, 232) so as to form one side wall of the opening (12a), and wherein the pair of guide lips (222, 232) is configured to protrude more than the second die lip (212) toward the substrate.

2. A slot die coater (10) configured to discharge a coating material onto a surface of a substrate, the slot die coater (10) comprising:
a first die (100) having a first surface;
a second die (200) having a second surface facing the first surface; and
a shim plate (300) interposed between the first surface of the first die (100) and the second surface of the second die (200) to form a slot (12) through which the coating material is configured to be discharged,
wherein the second die (200) comprises a pair of guide lips (222, 232) protruding from both ends of the opening of the slot (12) toward the substrate to be coated,
**characterized in that** the first die (100) comprises a first die lip (112) protruding toward the substrate so as to form one side wall of the opening (12a), wherein the second die (200) further comprises a second die lip (212) protruding toward the substrate between the pair of guide lips (222, 232) so as to form the other side wall of the opening (12a), and
wherein the first die lip (112) is configured to protrude more than the second die lip (212) toward the substrate.

3. The slot die coater (10) according to any of claims 1 or 2,
wherein the pair of guide lips (222, 232) is configured to come into contact with both side edge portions of the coating material discharged onto the surface of the substrate so as to guide the movement of the coating material according to the movement of the substrate.

4. The slot die coater (10) according to any of claims 1 or 2,
wherein the first die (100) further comprises an accommodation groove (116) configured to accommodate the coating material and lead to the slot (12).

5. The slot die coater (10) according to any of claims 1 or 2,
wherein the first die (100) comprises:
a body portion (110) having the first surface and the opening (12a) located at the front end thereof; and
a support portion (120) extending from the rear end of the body portion (110) toward the second die (200) and supporting the second die (200).

6. The slot die coater (10) according to claim 1,
wherein the protruding length of the pair of guide lips (222, 232) toward the substrate is configured to be greater than that of the second die lip (212) in the range of 100*µ*m to 300*µ*m.

7. The slot die coater (10) according to claim 1,
wherein the pair of guide lips (222, 232) and the second die lip (212) are configured to have a predetermined thickness, respectively, and protrude toward the substrate, and
wherein the pair of guide lips (222, 232) is configured to be thicker than the second die lip (212).

8. The slot die coater (10) according to any of claims 1 or 2,
wherein the second die (200) comprises:
a first die block (210) disposed at a predetermined gap from the first die (100) so as to form the slot (12);
a second die block (220) having a first guide lip (222) among the pair of guide lips (222, 232) and disposed on one side of the first die block (210); and
a third die block (230) having a second guide lip (232) among the pair of guide lips (222, 232) and disposed on the other side of the first die block (210).

9. The slot die coater (10) according to claim 8,
wherein the first die block (210') comprises:
a first support protrusion (218a) protruding from one side of the first die block (210') facing the second die block (220') toward the second die block (220'); and
a second support protrusion (218b) protruding from the other side of the first die block (210') facing the third die block (230') toward the third die block (230'),
wherein the second die block (220') further comprises a first support groove (228) configured to receive the first support protrusion (218a) to support the first die block (210'),
wherein the third die block (230') further comprises a second support groove (238) configured to receive the second support protrusion (218b) to support the first die block (210').

10. An electrode coating device (400) comprising the slot die coater (10) according to any one of claims 1 to 9, configured to coat an electrode substrate (E) using the slot die coater (10).

## Patentansprüche

1. Schlitzdüsenbeschichtungseinheit (10), welche dazu eingerichtet ist, ein Beschichtungsmaterial auf eine Fläche eines Substrats freizusetzen, wobei die Schlitzdüsenbeschichtungseinheit (10) umfasst:
eine erste Düse (100), welche eine erste Fläche aufweist;
eine zweite Düse (200), welche eine zweite Fläche aufweist, welche der ersten Fläche zugewandt ist; und
eine Ausgleichsplatte (300), welche zwischen der ersten Fläche der ersten Düse (100) und der zweiten Fläche der zweiten Düse (200) eingefügt ist, um einen Schlitz (12) zu bilden, durch welchen das Beschichtungsmaterial dazu eingerichtet ist, freigesetzt zu werden,
wobei die zweite Düse (200) ein Paar von Führungslippen (222, 232) umfasst, welche von beiden Enden der Öffnung des Schlitzes (12) zu dem zu beschichtenden Substrat vorstehen,
**dadurch gekennzeichnet, dass** die zweite Düse (200) ferner eine zweite Düsenlippe (212) umfasst, welche zu dem Substrat zwischen das Paar von Führungslippen (222, 232) vorsteht, um eine Seitenwandung der Öffnung (12a) zu bilden, und wobei das Paar von Führungslippen (222, 232) dazu eingerichtet ist, weiter zu dem Substrat vorzustehen als die zweite Düsenlippe (212).

2. Schlitzdüsenbeschichtungseinheit (10), welche dazu eingerichtet ist, ein Beschichtungsmaterial auf eine Fläche eines Substrats freizusetzen, wobei die Schlitzdüsenbeschichtungseinheit (10) umfasst:
eine erste Düse (100), welche eine erste Fläche aufweist;
eine zweite Düse (200), welche eine zweite Fläche aufweist, welche der ersten Fläche zugewandt ist; und
eine Ausgleichsplatte (300), welche zwischen der ersten Fläche der ersten Düse (100) und der zweiten Fläche der zweiten Düse (200) eingefügt ist, um einen Schlitz (12) zu bilden, durch welchen das Beschichtungsmaterial dazu eingerichtet ist, freigesetzt zu werden,
wobei die zweite Düse (200) ein Paar von Führungslippen (222, 232) umfasst, welche von beiden Enden der Öffnung des Schlitzes (12) zu dem zu beschichtenden Substrat vorstehen,
**dadurch gekennzeichnet, dass** die erste Düse (100) eine erste Düsenlippe (112) umfasst, welche zu dem Substrat vorsteht, um eine Seitenwandung der Öffnung (12a) zu bilden, wobei die zweite Düse (200) ferner eine zweite Düsenlippe (212) umfasst, welche zu dem Substrat zwischen das Paar von Führungslippen (222, 232) vorsteht, um die andere Seitenwandung der Öffnung (12a) zu bilden, und
wobei die erste Düsenlippe (112) dazu eingerichtet ist, weiter zu dem Substrat vorzustehen als die zweite Düsenlippe (212).

3. Schlitzdüsenbeschichtungseinheit (10) nach einem der Ansprüche 1 oder 2,
wobei das Paar von Führungslippen (222, 232) dazu eingerichtet ist, mit beiden Seitenrandabschnitten des Beschichtungsmaterials in Kontakt zu kommen, welches auf die Fläche des Substrats freigesetzt ist, um die Bewegung des Beschichtungsmaterials gemäß der Bewegung des Substrats zu führen.

4. Schlitzdüsenbeschichtungseinheit (10) nach einem der Ansprüche 1 oder 2,
wobei die erste Düse (100) ferner eine Aufnahmenut (116) umfasst, welche dazu eingerichtet ist, das Beschichtungsmaterial aufzunehmen und zu dem Schlitz (12) zu leiten.

5. Schlitzdüsenbeschichtungseinheit (10) nach einem der Ansprüche 1 oder 2,
wobei die erste Düse (100) umfasst:
einen Körperabschnitt (110), welcher die erste Fläche und die Öffnung (12a) aufweist, welche an dem vorderen Ende davon angeordnet ist; und
einen Halterungsabschnitt (120), welcher sich von dem hinteren Ende des Körperabschnitts (110) zu der zweiten Düse (200) erstreckt und die zweite Düse (200) haltert.

6. Schlitzdüsenbeschichtungseinheit (10) nach Anspruch 1,
wobei die Vorsprunglänge des Paars von Führungslippen (222, 232) zu dem Substrat dazu eingerichtet ist, größer zu sein als die der zweiten Düsenlippe (212) in dem Bereich von 100 µm bis 300 µm.

7. Schlitzdüsenbeschichtungseinheit (10) nach Anspruch 1,
wobei das Paar von Führungslippen (222, 232) und die zweite Düsenlippe (212) dazu eingerichtet sind, jeweils eine vorbestimmte Dicke aufzuweisen und zu dem Substrat vorzustehen, und
wobei das Paar von Führungslippen (222, 232) dazu eingerichtet ist, dicker zu sein als die zweite Düsenlippe (212).

8. Schlitzdüsenbeschichtungseinheit (10) nach einem der Ansprüche 1 oder 2,
wobei die zweite Düse (200) umfasst:
einen ersten Düsenblock (210), welcher an einem vorbestimmten Spalt von der ersten Düse (100) angeordnet ist, um den Schlitz (12) zu bilden;
einen zweiten Düsenblock (220), welcher eine erste Führungslippe (222) unter dem Paar von Führungslippen (222, 232) aufweist und an einer Seite des ersten Düsenblocks (210) angeordnet ist; und
einen dritten Düsenblock (230), welcher eine zweite Führungslippe (232) unter dem Paar von Führungslippen (222, 232) aufweist und an der anderen Seite des ersten Düsenblocks (210) angeordnet ist.

9. Schlitzdüsenbeschichtungseinheit (10) nach Anspruch 8,
wobei der erste Düsenblock (210') umfasst:
einen ersten Halterungsvorsprung (218a), welcher von einer Seite des ersten Düsenblocks (210'), welche dem zweiten Düsenblock (220') zugewandt ist, zu dem zweiten Düsenblock (220') vorsteht; und
einen zweiten Halterungsvorsprung (218b), welcher von der anderen Seite des ersten Düsenblocks (210'), welche dem dritten Düsenblock (230') zugewandt ist, zu dem dritten Düsenblock (230') vorsteht,
wobei der zweite Düsenblock (220') ferner eine erste Halterungsnut (228) umfasst, welche dazu eingerichtet ist, den ersten Halterungsvorsprung (218a) aufzunehmen, um den ersten Düsenblock (210') zu haltern,
wobei der dritte Düsenblock (230') ferner eine zweite Halterungsnut (238) umfasst, welche dazu eingerichtet ist, den zweiten Halterungsvorsprung (218b) aufzunehmen, um den ersten Düsenblock (210') zu haltern.

10. Elektrodenbeschichtungsvorrichtung (400), umfassend die Schlitzdüsenbeschichtungseinheit (10) nach einem der Ansprüche 1 bis 9, welche dazu eingerichtet ist, ein Elektrodensubstrat (E) unter Verwendung der Schlitzdüsenbeschichtungseinheit (10) zu beschichten.

## Revendications

1. Dispositif de revêtement à filière à fente (10) configuré pour décharger un matériau de revêtement sur une surface d'un substrat, le dispositif de revêtement à filière à fente (10) comprenant :
une première filière (100) présentant une première surface ;
une seconde filière (200) présentant une seconde surface en regard de la première surface ; et
une plaque de cale (300) interposée entre la première surface de la première filière (100) et la seconde surface de la seconde filière (200) pour former une fente (12) à travers laquelle le matériau de revêtement est configuré pour être déchargé,
dans lequel la seconde filière (200) comprend une paire de lèvres de guidage (222, 232) faisant saillie des deux extrémités de l'ouverture de la fente (12) vers le substrat à enduire,
**caractérisé en ce que** la seconde filière (200) comprend en outre une lèvre de seconde filière (212) saillante vers le substrat entre la paire de lèvres de guidage (222, 232) afin de former une paroi latérale de l'ouverture (12a), et dans lequel la paire de lèvres de guidage (222, 232) est configurée pour faire saillie plus que la lèvre de seconde filière (212) vers le substrat.

2. Dispositif de revêtement à filière à fente (10) configuré pour décharger un matériau de revêtement sur une surface d'un substrat, le dispositif de revêtement à filière à fente (10) comprenant :
une première filière (100) présentant une première surface ;
une seconde filière (200) présentant une seconde surface en regard de la première surface ; et
une plaque de cale (300) interposée entre la première surface de la première filière (100) et la seconde surface de la seconde filière (200) pour former une fente (12) à travers laquelle le matériau de revêtement est configuré pour être déchargé,
dans lequel la seconde filière (200) comprend une paire de lèvres de guidage (222, 232) faisant saillie des deux extrémités de l'ouverture de la fente (12) vers le substrat à enduire,
**caractérisé en ce que** la première filière (100) comprend une lèvre de première filière (112) saillante vers le substrat afin de former une paroi latérale de l'ouverture (12a), dans lequel la seconde filière (200) comprend en outre une lèvre de seconde filière (212) saillante vers le substrat entre la paire de lèvres de guidage (222, 232) afin de former l'autre paroi latérale de l'ouverture (12a), et
dans lequel la lèvre de première filière (112) est configurée pour faire saillie plus que la lèvre de seconde filière (212) vers le substrat.

3. Dispositif de revêtement à filière à fente (10) selon l'une quelconque des revendications 1 ou 2 ;
dans lequel la paire de lèvres de guidage (222, 232) est configurée pour entrer en contact avec les deux parties de bord latéral du matériau de revêtement déchargé sur la surface du substrat de manière à guider le mouvement du matériau de revêtement selon le mouvement du substrat.

4. Dispositif de revêtement à filière à fente (10) selon l'une quelconque des revendications 1 ou 2 ;
dans lequel la première filière (100) comprend en outre une rainure d'accueil (116) configurée pour accueillir le matériau de revêtement et le conduire vers la fente (12).

5. Dispositif de revêtement à filière à fente (10) selon l'une quelconque des revendications 1 ou 2 ;
dans lequel la première filière (100) comprend :
une partie corps (110) présentant la première surface et l'ouverture (12a) située à son extrémité avant ; et
une partie de support (120) s'étendant de l'extrémité arrière de la partie corps (110) vers la seconde filière (200) et supportant la seconde filière (200).

6. Dispositif de revêtement à filière à fente (10) selon la revendication 1,
dans lequel la longueur de saillie de la paire de lèvres de guidage (222, 232) vers le substrat est configurée pour être supérieure à celle de la lèvre de seconde filière (212) dans la plage de 100µm à 300µm.

7. Dispositif de revêtement à filière à fente (10) selon la revendication 1,
dans lequel la paire de lèvres de guidage (222, 232) et la lèvre de seconde filière (212) sont configurées pour présenter respectivement une épaisseur prédéterminée, et faire saillie vers le substrat, et
dans lequel la paire de lèvres de guidage (222, 232) est configurée pour être plus épaisse que la lèvre de seconde filière (212).

8. Dispositif de revêtement à filière à fente (10) selon l'une quelconque des revendications 1 ou 2 ;
dans lequel la seconde filière (200) comprend :
un premier bloc de filière (210) disposé à un espace prédéterminé par rapport à la première filière (100) de manière à former la fente (12) ;
un deuxième bloc de filière (220) présentant une première lèvre de guidage (222) parmi la paire de lèvres de guidage (222, 232) et disposé d'un côté du premier bloc de filière (210) ; et
un troisième bloc de filière (230) présentant une seconde lèvre de guidage (232) parmi la paire de lèvres de guidage (222, 232) et disposé de l'autre côté du premier bloc de filière (210).

9. Dispositif de revêtement à filière à fente (10) selon la revendication 8,
dans lequel le premier bloc de filière (210') comprend :
une première saillie de support (218a) saillante d'un côté du premier bloc de filière (210') en regard du deuxième bloc de filière (220') vers le deuxième bloc de filière (220') ; et
une seconde saillie de support (218b) saillante de l'autre côté du premier bloc de filière (210') en regard du troisième bloc de filière (230') vers le troisième bloc de filière (230'),
dans lequel le deuxième bloc de filière (220') comprend en outre une première rainure de support (228) configurée pour recevoir la première saillie de support (218a) pour supporter le premier bloc de filière (210'),
dans lequel le troisième bloc de filière (230') comprend en outre une seconde rainure de support (238) configurée pour recevoir la seconde saillie de support (218b) pour supporter le premier bloc de filière (210').

10. Dispositif de revêtement d'électrode (400) comprenant le dispositif de revêtement à filière à fente (10) selon l'une quelconque des revendications 1 à 9, configuré pour enduire un substrat d'électrode (E) à l'aide du dispositif de revêtement à filière à fente (10).
